# EUROPEAN PATENT APPLICATION

(11) **EP 4 847 901 A1**
(43) Date of publication of application: **02.12.2026**
(21) Application number: 26181923.9
(22) Date of filing: 29.05.2026
(51) Int. Cl.: G01M 17/08, G01P 15/18

(54) **METHOD FOR SIMULATING A DECELERATION OR ACCELERATION PHASE OF A RAILWAY VEHICLE BY MEANS OF ACCELEROMETER SENSOR AND CORRESPONDING SYSTEM**

(30) Priority: 30.05.2025 IT 202500012670
(71) Applicant: Faiveley Transport Italia S.p.A., 10045 Piossasco (TO) (IT)
(72) Inventor: FREA, Matteo, I-10060 CANTALUPA (Torino) (IT); LUCARELLI, Stefano, I-10136 TORINO (IT)
(74) Representative: Cristinelli, Luca

(57) **Abstract**

A method for simulating a deceleration or acceleration phase of a railway vehicle by means of accelerometer sensor means is described, comprising the steps of:
a) positioning the accelerometer sensor means so that all gravitational acceleration is detected or all gravitational acceleration is substantially measured on a first measurement axis of said accelerometer sensor means;
b) for simulating a deceleration or acceleration phase of a vehicle, tilting the accelerometer sensor means so that a portion of gravitational acceleration is measured on a second measurement axis of said accelerometer sensor means.

Furthermore, a system for simulating a deceleration or acceleration phase of a railway vehicle by means of accelerometer sensor means is described.

## Description

### Technical sector

The present invention relates, in general, to the field of test and simulation methods; in particular, the invention relates to a method for simulating a deceleration or acceleration phase of a railway vehicle by means of accelerometer sensor means and to a system for simulating a deceleration or acceleration phase of a railway vehicle by means of accelerometer sensor means.

### Background art

In the field of vehicles, in particular of railway vehicles, the use of accelerometers for monitoring and analyzing the dynamic behavior of the vehicle is widespread. Accelerometers, devices capable of measuring acceleration along one or more axes, are applied in many contexts, including advancement speed estimation, vibration detection and monitoring of vehicle operating conditions.

Currently, it is consolidated practice to carry out a field test phase before commissioning the vehicle to ensure the reliability of the data provided by the accelerometers. This test phase comprises installing accelerometers on the vehicle and validating them under real operating conditions, e.g., on railway lines or in dedicated outdoor environments. However, this method has several disadvantages, such as:
- Long times: the need to carry out field tests implies a significant lengthening of the completion times of the test phase;
- Logistical constraints: the unavailability of railway lines or dedicated areas for carrying out the tests may represent an operational obstacle;
- High costs: the installation and management of the infrastructure necessary for field testing implies considerable financial burdens.

Despite the importance of this validation phase, no alternative solutions are currently available which allow the accelerometers to be tested in controlled environments, such as laboratories or indoor environments. In particular, there are no systems or methods which effectively make it possible to simulate the acceleration and deceleration conditions of a vehicle without resorting to field tests.

This technological gap highlights the need to develop innovative solutions which make it possible to overcome the limitations of current methods, offering a practical, cost-effective, and reliable alternative for testing accelerometers in controlled environments.

### Summary of the invention

The present invention aims to overcome the limitations and disadvantages associated with the testing methods currently used for accelerometers to be installed on vehicles, in particular, railway vehicles. The main objects of the invention include:
1. Providing a system and a method for simulating vehicle acceleration and deceleration conditions in controlled environments, such as laboratories or sheds, eliminating the need for carrying out field tests;
2. Reducing the test time of accelerometers, allowing quicker and more immediate validation than conventional methods;
3. Minimizing logistical constraints, eliminating dependence on test lines or dedicated external areas for carrying out the tests;
4. Reducing the operating costs associated with testing, by eliminating the complex and expensive infrastructures required for field tests;
5. Ensuring high reliability and accuracy in the simulation of the dynamic conditions of the vehicle, making it possible to validate the operation of the accelerometers in an accurate and repeatable manner;
6. Offering a versatile and adaptable solution, which can be used to simulate both acceleration and deceleration conditions, and which is compatible with different types of vehicles and accelerometer configurations;
7. Facilitating the analysis and monitoring of acceleration data, providing tools to estimate acceleration, deceleration, and the forward speed values of the vehicle as a function of the collected data.

Through the achievement of these objectives, the invention aims at providing an innovative, practical and cost-effective solution for test accelerometers, contributing to improving simulation and testing technologies in the vehicle sector.

In brief, the present invention relates to a method for simulating a deceleration or acceleration phase of a railway vehicle by means of accelerometer sensor means and a corresponding system.

The vehicle, whose acceleration or deceleration phase it is intended to be simulated, is a railway vehicle.

The method comprises the following main steps:
a) Initial positioning of the accelerometer sensor means: the accelerometer sensors are positioned so that a first measurement axis Az is oriented to detect (i.e., measure) all (i.e., substantially all) gravitational acceleration;
b) Tilting the accelerometer sensor means: the sensors are tilted so that a second measurement axis detects a portion of gravitational acceleration.

These and other objects and advantages are achieved:
- according to an aspect of the invention, by a method for simulating a deceleration or acceleration phase of a vehicle by means of accelerometer sensor means having the features defined in claim 1;
- according to a further aspect of the invention, by a system for simulating a deceleration or acceleration phase of a vehicle by means of accelerometer sensor means having the features defined in claim 12.

Preferred embodiments of the invention are defined in the dependent claims, the contents of which are intended to form an integral part of this description.

### Brief description of the drawings

The functional and structural features of some preferred embodiments of a system for simulating a deceleration or acceleration phase of a railway vehicle by means of accelerometer sensor means, and of a method for simulating a deceleration or acceleration phase of a railway vehicle by means of accelerometer sensor means, according to the invention, will now be described. Reference is made to the accompanying drawings, in which:
- figure 1 shows an initial positioning of the accelerometer sensor means according to step a);
- figure 2 shows a positioning of the accelerometer sensor means to simulate an acceleration according to step b);
- figure 3 shows a positioning of the accelerometer sensor means to simulate a deceleration according to step b):
- figure 4 shows, by way of example, a deceleration or tangential acceleration phase of the railway vehicle.

### Detailed description

Before explaining a plurality of embodiments of the invention in detail, it is worth noting that the application of the invention is not limited to the constructive details and to the configuration of the components presented in the following description or shown in the drawings. The invention can assume other embodiments and may be implemented or made in practice in different manners. It must also be understood that the phraseology and the terminology are only descriptive and must not be understood as limitative. The use of "include" and "comprise" and variations thereof are intended to comprise the elements enunciated below and their equivalents, as well as additional elements and equivalents thereof.

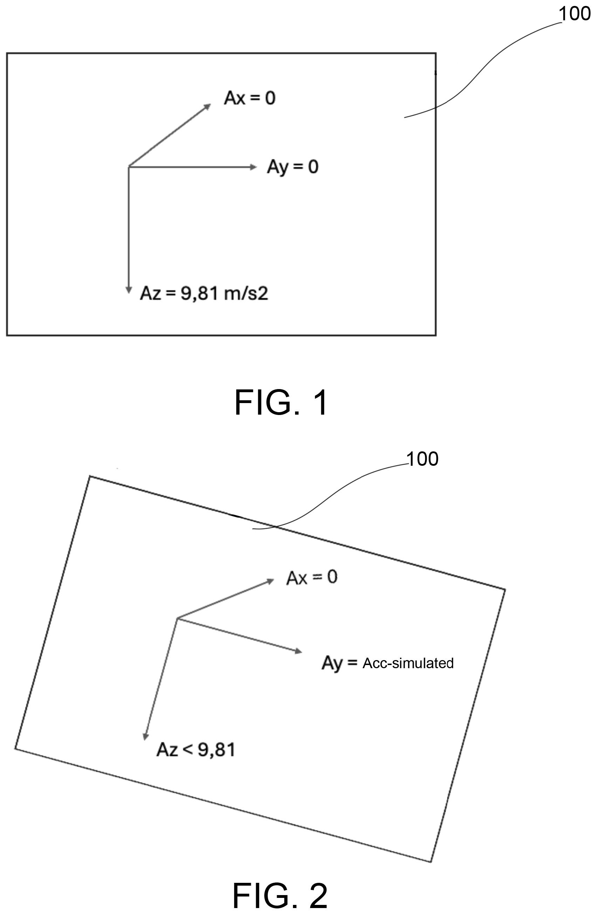

With initial reference to figure 1, an embodiment of a method for simulating a deceleration or acceleration phase of a vehicle by means of accelerometer sensor means 100 is described below.

The vehicle, whose acceleration or deceleration phase it is intended to be simulated, is a railway vehicle.

The method for simulating a deceleration or acceleration phase of a railway vehicle by means of accelerometer sensor means 100, comprising the steps of:
a) positioning the accelerometer sensor means 100 so that all gravitational acceleration or substantially all gravitational acceleration is measured on a first measurement axis Az of said accelerometer sensor means;
b) for simulating a deceleration or acceleration phase of a railway vehicle, tilting the accelerometer sensor means 100 so that a portion of gravitational acceleration is measured on a second measurement axis of said accelerometer sensor means.

In other words, as, for example, observable in figure 1, in step a), the accelerometer sensor means 100 are positioned so that an acceleration corresponding to the gravitational acceleration, typically equal to about 9.81 m/s², is present along the first measurement axis Az.

In general, "all gravitational acceleration is substantially measured" may mean the entire component of the acceleration of gravity may be understood, except for tolerances typical for the skilled person in the field of accelerometer sensor means.

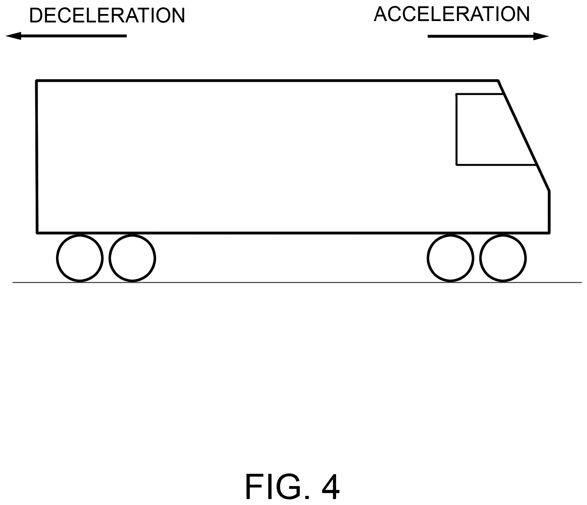

Preferably, as, for example, observable in figure 4, the deceleration or acceleration phase may be a tangential deceleration or acceleration phase of the railway vehicle.

In other words, a simulation of acceleration or deceleration relative to the advancement speed may be performed.

In that case, the method specifically simulates the longitudinal dynamics of the railway vehicle, corresponding to the traction phases (positive acceleration) and the braking phases, e.g. pneumatic or electric (negative acceleration or deceleration). This clearly differentiates the present method from systems aimed at simulating swaying, lateral running instabilities on curves.

Steps a) and b) may be implemented by electronic processing means.

Preferably, step b) may comprise:
b') for simulating an acceleration phase of a railway vehicle, tilting the accelerometer sensor means 100 in a first direction along a tilt direction parallel to the second measurement axis Ay;
alternatively or additionally
b") for simulating a deceleration phase of a railway vehicle, tilting the accelerometer sensor means 100 according to a second direction opposite to first direction along a tilt direction parallel to the second measurement axis Ay.

For example, axis Az of the accelerometer sensor means is used to indicate the first measurement axis and axis Ay of the accelerometer sensor means is used to indicate the second measurement axis. It is understood that the described axis configuration constitutes exclusively an illustrative and non-limiting example of the present invention, it being possible to implement different arrangements of the axes without departing from the claimed scope of protection. For example, axis Ay or axis Ax of the accelerometer sensor means may be assigned to the first measurement axis, and axis Ax or axis Az of the accelerometer sensor means may be assigned to the second measurement axis.

As can be observed, for example, in figure 2, in step b), the accelerometer sensor means 100 may be tilted, according to a first direction along said parallel tilt direction, to simulate an acceleration phase of a vehicle, so that a portion of gravitational acceleration (Acc_simulated) is measured on the second measurement axis Ay of the accelerometer sensor means 100.

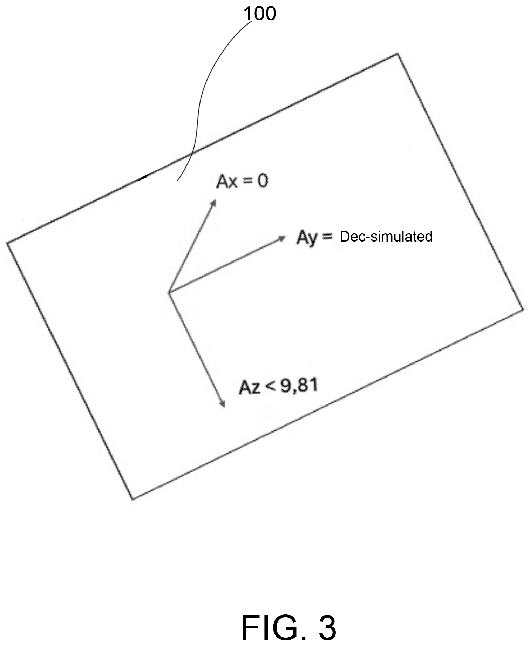

As can be observed, for example, in figure 3, in step b), the accelerometer sensor means 100 may be tilted, according to a second direction along said parallel tilt direction, to simulate a deceleration phase (i.e., negative acceleration) of a vehicle, so that a portion of gravitational acceleration (Dec_simulated) is measured on the second measurement axis Ay of the accelerometer sensor means 100.

As can be observed in figure 2 and figure 3, positive or negative acceleration values, respectively, will be obtained on the second measurement axis Ay to simulate accelerations or decelerations.

Preferably, the step a) may comprise positioning the accelerometer sensor means 100 on a support.

Preferably, the support on which the accelerometer sensor means 100 are arranged may comprise a tiltable rigid platform actuated by an actuation system. In this case, step b) may comprise tilting said support by actuating said actuation system.

For example, the rigid tiltable platform may be configured to be tilted by means of a mechanical, pneumatic or hydraulic movement system. For example, the platform may be mounted on a system of levers or pistons which allows the tilt angle to be varied in a controlled manner.

Preferably, the support may comprise a frame structure with at least one rotating joint actuated by at least one electric motor to adjust the tilt. In this case, step b) may comprise tilting said support by actuating the at least one electric motor.

For example, the frame structure with one or more rotation joints: may allow tilting the support on which the accelerometer sensor means 100 are mounted. This type of structure may be actuated by one or more electric motors or manual systems to adjust the tilt.

Preferably, the support may comprise a platform connected to an electric motor by means of a set of gears to adjust the tilt. In this case, step b) may comprise tilting said support by actuating the electric motor.

For example, the platform with an electric motor and gears may be a system in which the support is connected to an electric motor by means of a gear set. The rotation of the motor may allow the platform to be tilted accurately, simulating the desired acceleration or deceleration conditions.

Preferably, the support may comprise a pneumatic system comprising at least one extendable or retractable piston to tilt the support. In this case, step b) may comprise tilting the support by extending or retracting of the piston.

For example, the pneumatic support may be a support based on one or more pneumatic pistons which may be extended or retracted to tilt the platform. This system is particularly adapted for applications which require smooth movements and rapid adjustments.

Some further examples of support which may be used to implement the method described in the invention are described below:
- Hinge system with counterweights: A support provided with a hinge which allows tilting the platform. The tilt angle may be adjusted using counterweights or springs to balance the motion;
- Platform with linear actuators: A system which uses linear actuators to raise or lower one of the ends of the platform. The actuators may be electronically controlled to obtain precise and repeatable tilts;
- Modular support: A support consisting of interchangeable modules which allow the system configuration to vary based on the specific requirements of the test. For example, the modules may include different types of actuators or tilting mechanisms;

The support examples described above may be used individually or in combination to implement the method described in the invention, ensuring flexibility and adaptability to different applications and test configurations.

In a further aspect, the present invention relates to a system for simulating a deceleration or acceleration phase of a railway vehicle by means of accelerometer sensor means 100.

In an embodiment, the system for simulating a deceleration or acceleration phase of a railway vehicle by means of accelerometer sensor means 100 comprises processing means configured to implement a method for simulating a deceleration or acceleration phase of a railway vehicle by means of accelerometer sensor means according to any one of the embodiments described above.

By way of non-limiting example, with reference to any of the embodiments mentioned above, the electronic processing means may be or comprise at least one of the following elements: a control circuit, a controller, a microcontroller, a processor, a microprocessor, an FPGA, a PLC, a computer, an embedded system, or similar units.

Preferably, the accelerometer sensor means may be or comprise at least one triaxial accelerometer configured to measure acceleration values along a plurality of measurement axes (Ax, Ay, Az). In brief, a triaxial accelerometer may be considered an essential instrument for measuring accelerations in three dimensions, making it particularly useful in applications requiring an accurate analysis of motion or forces, such as in the case of the system for determining the speed or acceleration of a vehicle.

Preferably, the system for simulating a deceleration or acceleration phase of a railway vehicle by means of accelerometer sensor means may comprise a support configured to support the accelerometer sensor means.

Preferably, the electronic processing means may be configured to determine the tilt of the accelerometer sensor means necessary to simulate a predetermined acceleration or deceleration value.

In other words, the electronic processing means may be programmed or designed to calculate the required tilt angle of the accelerometer sensor means, so as to reproduce a specific predetermined acceleration or deceleration value.

All the embodiments described above for the method for simulating a deceleration or acceleration phase of a railway vehicle by means of accelerometer sensor means, even if not explicitly repeated, are similarly applicable to the system for simulating a deceleration or acceleration phase of a railway vehicle by means of accelerometer sensor means.

In the following, some examples of railway vehicles are set forth:
- Locomotives: Motorized rail vehicles used to haul or push railway cars on rails. May be powered by diesel, electric or steam engines;
- Passenger trains: Railway vehicles designed for the transport of people, such as: Regional or suburban trains;
- High-speed trains;
- Metro trains (urban subways);
- Freight trains: Railway vehicles designed for the transport of freight and material, such as: Tank wagons for the transport of liquids, Flat wagons for containers or heavy loads, Covered wagons for goods sensitive to atmospheric conditions;
- Trams: Light rail vehicles used for urban rail transport, often electrically powered;
- Light rail systems: Light rail systems used for urban or suburban transport, with intermediate features between trams and conventional trains;
- Monorail trains: Railway vehicles that run on a single rail, often used in urban or tourist contexts;
- Rack railway trains: Railway vehicles designed to negotiate steep gradients, using a rack-pinion system to improve grip;
- Tourist trains: Railway vehicles used for tourist purposes, such as panoramic or historic trains;
- Industrial trains: Railway vehicles used in industrial settings, such as mines or production plants, for the transport of materials or equipment;
- Automatic trains: Driverless railway systems, used in metros or dedicated lines, often controlled by advanced electronic systems;

These examples demonstrate the versatility of the invention, which may be applied to simulate a wide range of railway vehicles.

Terms such as "processing", "calculating" or "determining" refer to the operations performed by the processing means (e.g. a control circuit), which may, for example, include computer systems or electronic devices which may handle data represented as physical (electronic) quantities in memories or registers. One or more components may be described as "configured to", "configurable to", "operable/operative for", "adapted/adaptable to", "arranged to" or similar terms. Unless explicitly indicated, these terms comprise components in both an active state and an inactive state. Unless otherwise specified, terms such as "including" or "having" must be interpreted as open terms (i.e. "including but not limited to"). Numerical indications generally refer to "at least" the indicated number, and disjunctive terms such as "A or B" must be interpreted as including one or both, unless explicitly specified. The operations contained in a claim may be performed in any order, unless explicitly indicated. The expression "at least one of A, B and C" must be interpreted as any combination of A, B and C, such as A alone, B alone, C alone, A and B together, A and C together, B and C together and/or A, B and C together. For example, the phrase "at least one of A, B or C" must be interpreted as a combination of A, B, C, A and B, A and C, B and C and/or A, B and C together.

The present written description may disclose different embodiments of the invention, comprising the best manner, and may allow a person ordinarily skilled in the art to put the embodiments of the invention into practice, comprising making and using of any device or system and performing any incorporated method. The scope of patentability of the invention is defined by the claims and may include other embodiments which may be made by a person ordinarily skilled in the art. Such other embodiments may be understood as falling within the scope of the claims if they have structural elements which do not differ from the literal language of the claims, or if they include equivalent structural elements with differences which are not substantial with respect to the literal language of the claims.

The present invention offers numerous advantages with respect to conventional accelerometer test methods. The main advantages include:
- Elimination of field tests: The invention makes it possible to simulate acceleration and deceleration conditions in controlled environments, such as laboratories or sheds, eliminating the need for performing field tests, which are often complex and costly;
- Reduction of test time: By virtue of the possibility of performing tests in indoor environments, the time required for accelerometer validation is significantly reduced with respect to conventional methods;
- Minimization of logistical constraints:
   It is no longer necessary to have test lines or dedicated outdoor areas for testing, considerably simplifying logistics and increasing operational flexibility;
- Reduction of operating costs: The elimination of the complex infrastructure required for field testing implies a significant reduction in the costs associated with accelerometer testing;
- High precision and reliability: The invention ensures an accurate and repeatable simulation of the dynamic conditions of the vehicle, improving the collected data reliability and the accelerometer validation;
- Versatility and adaptability: The system is compatible with different types of vehicles and accelerometer configurations, making it possible to simulate of both acceleration and deceleration conditions in a flexible manner;
- Data analysis facilitation: The integrated electronic processing means make it possible to estimate the vehicle acceleration, deceleration, and forward speed values, simplifying collected data analysis and monitoring;
- Simplicity of implementation: The system and method described are designed to be implemented in a simple and practical manner, making the invention easily integrable into existing testing processes.

These advantages make the invention an innovative, cost-effective and highly efficient solution for accelerometer testing, contributing to improving the simulation and test technologies in the sector of accelerometer sensor means for railway vehicles.

Various aspects and embodiments of a method and a system for simulating a deceleration or acceleration phase of a railway vehicle by means of accelerometer sensor means, according to the invention, have been described. It is understood that each embodiment can be combined with any other embodiment. Furthermore, the invention is not limited to the described embodiments but can be varied within the scope defined by the accompanying claims.

## Claims

1. A method for simulating a deceleration or acceleration phase of a railway vehicle by means of accelerometer sensor means, comprising the steps of:
a) positioning said accelerometer sensor means such that all gravitational acceleration or substantially all gravitational acceleration is measured on a first measurement axis of said accelerometer sensor means;
b) for simulating a deceleration or acceleration phase of a railway vehicle, tilting said accelerometer sensor means so that a portion of gravitational acceleration is measured on a second measurement axis of said accelerometer sensor means.

2. The method according to claim 1, further comprising the step of:
c) when said accelerometer sensor means are tilted such that a portion of gravitational acceleration is measured on said second measurement axis, estimating an acceleration value or a deceleration value as a function of the acceleration value measured on said second measurement axis.

3. The method according to claim 1 or 2, wherein step b) comprises:
b') for simulating an acceleration phase of a railway vehicle, tilting said accelerometer sensor means in a first direction along a tilt direction parallel to the second measurement axis; and/or
b") for simulating a deceleration phase of a railway vehicle, tilting said accelerometer sensor means in a second direction, opposite to said first direction, along said tilt direction parallel to the second measurement axis.

4. The method according to any one of the preceding claims, wherein step a) comprises positioning said accelerometer sensor means on a support.

5. The method according to claim 4, wherein the support on which the accelerometer sensor means are disposed comprises a tiltable rigid platform actuated by an actuation system;
wherein step b) comprises tilting said support by actuating said actuation system.

6. The method according to claim 4, wherein the support comprises a frame structure with at least one rotating joint actuated by at least one electric motor to adjust the inclination;
wherein step b) comprises tilting said support by actuating said at least one electric motor.

7. The method according to claim 4, wherein the support comprises a platform connected to an electric motor via a set of gears to adjust the inclination;
wherein step b) comprises tilting said support by actuating said electric motor.

8. The method according to claim 4, wherein the support comprises a pneumatic system comprising at least one extendable or retractable piston to tilt the support;
wherein step b) comprises tilting said support by extending or retracting said piston.

9. The method according to claim 4, wherein the support comprises a platform equipped with at least one electronically controlled linear actuator to adjust the inclination;
wherein step b) comprises tilting said support by electronically controlling said linear actuator.

10. The method according to claim 4, wherein the support comprises a hinge system with at least one counterweight or at least one spring to balance the tilting movement.

11. The method according to any one of the preceding claims, wherein said deceleration or acceleration phase is a tangential deceleration or acceleration phase of the railway vehicle.

12. A system for simulating a deceleration or acceleration phase of a railway vehicle by means of accelerometer sensor means, comprising processing means configured to implement a method for simulating a deceleration or acceleration phase of a railway vehicle by means of accelerometer sensor means according to any one of the preceding claims.

13. The system according to claim 12, wherein the accelerometer sensor means comprise at least one triaxial accelerometer configured to measure acceleration values along a plurality of measurement axes.

14. The system according to claim 12 or 13, comprising a support configured to support said accelerometer sensor means.

15. The system according to any one of the preceding claims, wherein the electronic processing means are configured to determine the inclination of the accelerometer sensor means necessary to simulate a predetermined acceleration or deceleration value.
